# EUROPEAN PATENT SPECIFICATION

(11) **EP 3 591 220 B1**
(45) Date of publication and mention of the grant of the patent: **26.10.2022**
(21) Application number: 18181441.9
(22) Date of filing: 03.07.2018
(51) Int. Cl.: F03D 13/00, F16B 35/04

(54) **WIND TURBINE**
WINDTURBINE
ÉOLIENNE

(43) Date of publication of application: 08.01.2020
(73) Proprietor: Siemens Gamesa Renewable Energy A/S, 7330 Brande (DK)
(72) Inventor: LUCAS, Thomas George, St. Georges Bristol BS5 7TW (GB); RAHN, Henrik, 7400 Herning (DK); SVENDSEN, Kenneth, 8600 Silkeborg (DK)
(74) Representative: SGRE-Association

(56) References cited:
- EP-A1- 2 636 898
- EP-A1- 2 688 713
- EP-A1- 3 330 553
- ES-A1- 2 134 091
- GB-A- 2 281 948

## Description

The invention refers to a wind turbine with a nacelle comprising a mounting structure to which at least one facing element is attached and/or with a hub comprising a mounting structure to which at least one facing element is attached, which at least one facing element is attached with several fixation devices.

Modern wind turbines usually comprise at least one, usually several facing or cladding elements which for example are part of a nacelle comprising the relevant components for producing energy. Such a nacelle facing element is for example a canopy or a side wall segment or the like. Another component which usually comprises such a facing element is the hub, to which a facing element in form of a spinner cover is attached. The nacelle and/or the hub comprises a respective mounting structure, to which this at least one facing element is attached by means of several fixation devices. These fixation devices usually comprise a bolt with a hex head and a screwed shaft, which bolt is inserted into two corresponding bores in the facing element and the mounting structure, with the facing element overlapping the mounting structure. On the threaded shaft of the bolt a nut is screwed and tightened. Usually the bolt head is on the outside of the nacelle or hub, while the nut is on the inside.

When service or maintenance work needs to be performed it is necessary to also maintenance these fixations by retightening the bolt connections. For this operation two workers are necessary for attaching respective tools to the bolt head and the nut. One worker needs to be lifted on the outside of the nacelle or the hub to attach the tool to the bolt head, while the second worker works inside the nacelle or hub and uses his tool for retightening the nut. This is a very elaborate and expensive way for the maintenance operations. In an alternative embodiment of the prior art thick metal blocks comprising threaded blind bolts are arranged on the outside of the nacelle or the hub. From the inside a bolt is inserted into the corresponding bores of the mounting structure and the facing element and then screwed into the blind bore. While this fixation device allows the maintenance operation being performed by only one worker from the inside of the nacelle or the hub, it requires the use of many heavy and expensive metal blocks, which need to be made of stainless steel, and which are also effort full to handle when being installed.

It is therefore an object of the invention to provide an improved wind turbine.

For solving the problem a wind turbine as depicted above is characterized in that each fixation device comprises a bolt with a bolt head at one end, a threaded shaft extending through an opening in the facing element and the mounting structure and a tool mount for attaching a tool for holding the bolt, and a nut screwed on the threaded shaft, with the bolt head positioned at the outside of the nacelle or the hub and the tool mount and nut positioned at the inside of the nacelle or the hub.

According to the invention the fixation devices used are also bolt and nut connections, with the bolt having a specific layout. The bolt comprises a bolt head, which may be a hex head or a dome head. From the bolt head a shaft, which is at least partially threaded, extents. The shaft furthermore comprises a tool mount at the other end, which tool mount is used for attaching a tool, which is used for fixing or countering the bolt when necessary.

In the mounting position the shaft is inserted into the overlapping bores of the facing element and the mounting structure from the outside of the nacelle or the hub, so that the bolt head is at the outside of the nacelle or the hub and the other end of the shaft comprising the threaded portion and the end portion with the tool mount are arranged at the inside of the nacelle or the hub. On the threaded portion of the shaft a nut is screwed and tightened for tightly fixing the facing element to the mounting structure, when the wind turbine is set up.

In case a maintenance operation comprising a retightening of these bolt connections is necessary, this maintenance or retightening can be performed by a single person from the inside of the nacelle or the hub. As the bolt comprises a tool mount at the inner shaft end the maintenance worker can attach a tool to this tool mount, and a second tool to the nut. With the first tool attached to the tool mount he can hold or counter the bolt, so that when he rotates and tightens the nut with the second tool the bolt is fixed and cannot rotate. So it is possible that a single worker can do all the maintenance work from the inside of the nacelle or the hub, no second worker is necessary working from the outside of the nacelle or the hub.

As already mentioned the bolt head can be a hex head, in an alternative it can be a dome head with a respective tool mount for holding or fixing the bolt when the wind turbine is set up.

The tool mount at the free end of the shaft preferably comprises at least two several flat surfaces arranged around the circumference of the shaft. With these flat surfaces it is possible to attach and fix a tool like a wrench for fixing the bolt from the inside. Preferably the tool mount is a square head or a hex head. Examples of similar bolt fasteners are known from for instance GB 2 281 948 A or EP 2 688 713 A1.

The wind turbine is subjected to harsh environmental condition, especially rain. It is necessary to prevent water from entering the nacelle or the hub. Therefore, also for protecting the respective fixation devices and fixation points, according to the invention at least one sealing washer is arranged at the outside of the nacelle or the hub respectively of the facing element. This sealing washer tightly abuts the outside of the facing element, which usually overlaps the mounting structure arranged at the inside of the facing element. By means of this sealing washer a tight connection can be realized, the sealing washer prevents any water or humidity entering the bolt connection or entering through the connection. The sealing washer is tightly pressed against the facing element when the bolt connection is tightened by tightening the screw sealing the gap between the shaft and the bore of the facing element.

In case the bolt comprises the hex head a washer having a larger diameter than the hex head is arranged between the hex head and the sealing washer. This washer is used for distributing the pressure of the hex head after tightening the nut over a larger area on the sealing washer for uniformly pressing the sealing washer against the facing element.

In case the bolt comprises a dome head such an additional washer is not necessary, as the bolt head usually has a larger diameter respectively a larger surface pressing against the sealing washer due to its round shape, so that the sealing washer can be arranged between the dome head and the facing element.

According to another embodiment of the invention a spring washer biasing the nut can be provided. With this spring washer the nut is constantly biased against the thread of the shaft, so that it is secured and will not be loosened when vibrations or the like act on the bolt connection. The spring washer preferably rests against the nut and either the mounting structure or a washer resting against the mounting structure.

The facing element itself is preferably a fiber glass component, but it can also be a carbon fiber component.

Finally the facing element of the nacelle can be a canopy or a part of a canopy or a side wall element of a nacelle housing, or a spinner attached to the hub.

Embodiments of the invention showing the invention in details are shown in the accompanying drawings and the following description. The drawings show:
- Fig. 1: a principle sketch of a wind turbine with a nacelle and a hub and respective facing elements,
- Fig. 2: an exploded view of a fixation device according to a first embodiment of the invention,
- Fig. 3: a cross sectional view of a fixation area of a facing element to a mounting structure using the fixation device shown in fig. 2,
- Fig. 4: an exploded view of a fixation device of a second embodiment of the invention, and
- Fig. 5: a cross sectional view of a fixation area of a facing element to a mounting structure using the fixation device shown in fig. 4.

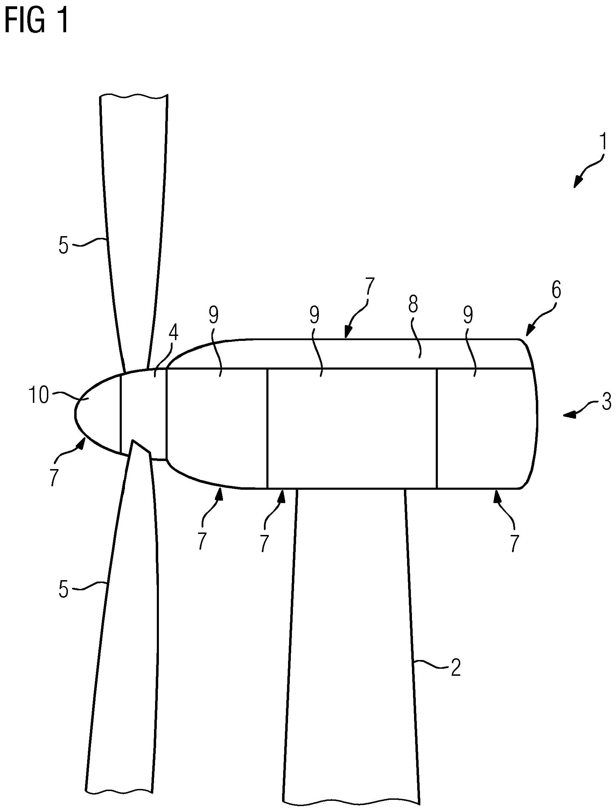

Fig. 1 shows a wind turbine 1, comprising a tower 2 and a nacelle 3 resting on the tower. It furthermore comprises a hub 4 to which respective rotor blades 5 are attached.

In this principle sketch the nacelle 3 comprises a housing 6, which comprises several facing elements 7 in the form of a canopy 8 or various wall elements 9, which are attached to a not shown mounting structure of the nacelle 3 used for housing the components in the inner of the nacelle 3.

Also the hub 4 is provided with a facing element 7 in the form of a spinner 10 covering the hub 4. Also this spinner 10 is attached to a respective mounting structure of the hub 4.

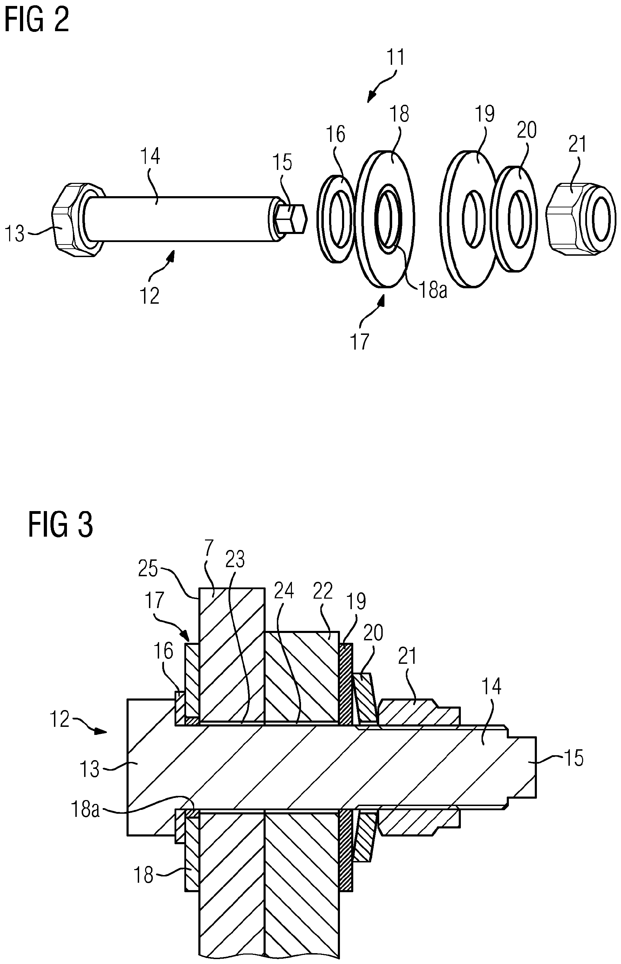

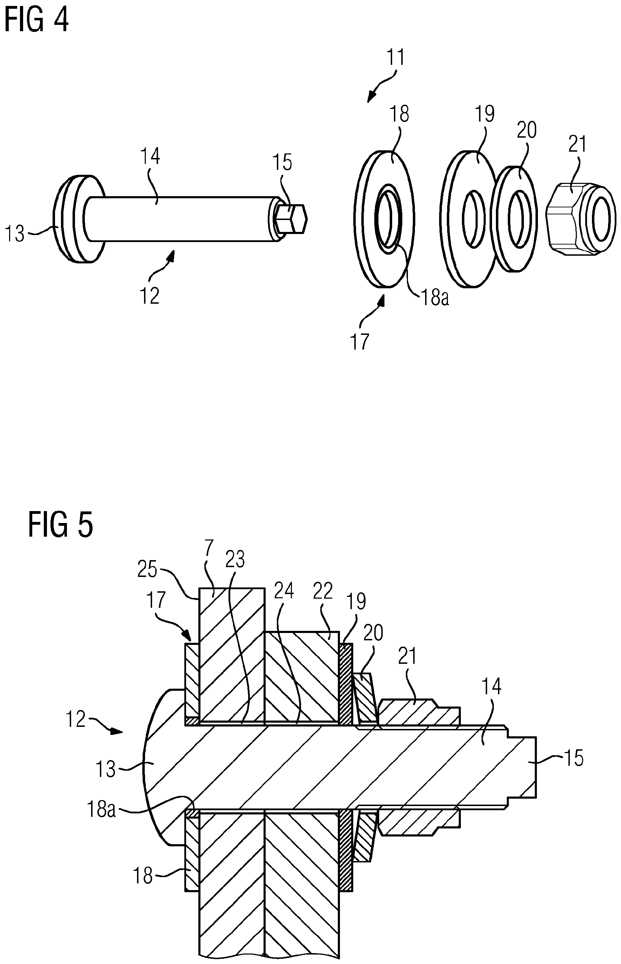

For attaching the various facing elements 7 to the respective mounting structures specific fixation devices in the form of bolt-and-nut-connections are used, with two specific embodiments of these fixation device being shown in figures 2 and 4.

Fig. 2 shows a first embodiment of a fixation device 11, comprising a bolt 12 with a bolt head 13. The bolt head 13 is a hex head. The bolt 12 further comprises a threaded shaft 14. At the end of the shaft 14 opposite to the bolt head 13 a tool mount 15 also in a form of a hex head is provided.

The fixation device 11 further comprises a washer 16 and a sealing washer 17 with a larger diameter than the washer 16. The sealing washer 17 comprises a metal disk member 18 and a sealing means 18a arranged at the inner circumference.

Furthermore the fixation device comprises another washer 19 followed by a spring washer 20 having a smaller diameter than the washer 19 and finally a nut 21 which will be screwed on the shaft 14.

Fig. 3 shows the mounting situation of a facing element 7 to a mounting structure 22 of the nacelle 3 or the hub 4. The mounting structure 22 is for example a steel bracket or another kind of frame member or the like.

As fig. 3 shows the facing element, which is for example a glass fiber reinforced plastic canopy 8 or wall member 9 or the spinner 10, comprises a first bore 23 and overlaps the mounting structure 22 at the outside. The mounting structure 22 comprises a second bore 24 aligned to the first bore 23.

The washer 16 and the sealing washer 17 are pushed on the shaft 14. Then the shaft 14 is pushed through the bores 23, 24 from the outside of the facing elements 7, so that the sealing washer 17 abuts the outer surface 25 of the facing element, while the bolt head 13 abuts the washer 16.

Now the washer 19 and the spring washer 20 are pushed on the shaft 14, finally the nut 21 is screwed on the threaded shaft 14 for tightening the connection. The spring washer 20 is compressed and biases the nut 14. When finally tightened the facing element 7 is tightly fixed to the mounting structure 22, with the sealing means 18a tightly sealing the gap between the shaft 14 and the facing element 7 so that water or any humidity cannot enter the inner of the connection.

As fig. 3 shows the tool mount 15 and the nut 21 are arranged at the inside of the nacelle 3 or the hub 4. When a maintenance operation is necessary and the fixation device 12 needs to be retightened, a single worker can perform this operation. It is only necessary to attach a respective tool like a wrench or a nut driver to the tool mount 15 and a second tool like a wrench to the nut 21. The first tool attached to the tool mount 15 is used for countering the bolt 12, while the second tool 21 is used for retightening the nut 21, so that the fixation device 12 again shows the necessary and requested mechanical properties.

Fig. 4 shows another embodiment of a fixation device 11, with the same reference numbers be used for the same items. The fixation device 11 comprises a bolt 12 with a bolt head 13 here in the form of a dome head comprising for example a recess for attaching a screw driver necessary for example when the wind turbine is set up.

Further comprises a seal washer 17 with a metal disk 18 and the sealing means 18a at the inner circumference. It furthermore comprises a washer 19 and a spring washer 20 with a smaller diameter than the washer 19 and finally the nut 21.

Fig. 5 shows the mounting situation of a facing element 7 to a mounting structure 22 using the fixation device 11 shown in fig. 4. The facing element 7 and the mounting structure 22, which may also be a steel bracket or the like, comprise respective bores 23, 24 being aligned, with the facing element 7 overlapping the mounting structure 22 at its outside.

After pushing the sealing washer 17 over the shaft 14 the shaft 14 inserted into the bores 23, 24, with the bolt head 13 being positioned at the outside of the facing element 7.

Now the washer 19 and the spring washer 20 are pushed on the threaded shaft 14, whereafter the nut 21 is screwed on the shaft 14 and tightened, so that the spring washer 21 is compressed and biases the nut 21.

When the nut 21 is tightened the bolt head 13 pushes the sealing washer 17 against the outside 25 of the facing element 7, which tightens the gap between the shaft 14 and the bore 23 by means of the sealing means 19.

It is obvious that also in this embodiment the tool mount 15, also in this case a hex head, and the nut 21 are arranged at the inside of the nacelle 3 or the hub 4. A necessary maintenance operation can be performed by a single worker also when this fixation device 11 is used, as he can attach a first tool like a wrench or a nut driver to the tool mount 15 and a second tool like a wrench to the nut 21 for countering the bolt 12 with a first tool and retightening the nut 21 with the second tool.

As in this embodiment a dome head bolt 12 is used having a circular shape and therefore a relatively large flat connection area pressing against the sealing washer 17, a separate washer like the washer 16 according to the fixation device 11 of fig. 2 is not necessary.

Finally the figures 2 to 4 show a tool mount 15 in the form of a hex head. It is to be noted that also a square head or only two parallel flat surfaces can be provided as a tool mount 15, which are adapted for example for attaching a wrench. In an alternative also a blind bore with a hex structure, i.e. an Allen-bore can be used as a tool mount 15, or a simple recess can be arranged at the front surface of the shaft 14 for inserting a screw driver. All these various tool mounts 15 can be used for attaching a holding tool for countering the bolt 12.

Although the present invention has been described in detail with reference to the preferred embodiment, the present invention is not limited by the disclosed examples from which the skilled person is able to derive other variations without departing from the scope of the invention.

## Claims

1. Wind turbine with a nacelle (3) comprising a mounting structure (22) to which at least one facing element (7) is attached and/or with a hub (4) comprising a mounting structure (22) to which at least one facing element (7) is attached, which at least one facing element (7) is attached with several fixation devices (11), **characterized in that** each fixation device (11) comprises a bolt (12) with a bolt head (13) at one end, a threaded shaft (14) extending through an opening (23, 24) in the facing element (7) and the mounting structure (22) and a tool mount (15) for attaching a tool for holding the bolt (12), and a nut (21) screwed on the threaded shaft (14), wherein at least one sealing washer (17) comprising a metal disk (18) and a sealing means (18a) arranged at the inner circumference is arranged at the outside of the facing element (7), with the bolt head (13) positioned at the outside of the nacelle (3) or the hub (4) and the tool mount (15) and nut (21) positioned at the inside of the nacelle (3) or the hub (4).

2. Wind turbine according to claim 1, **characterized in that** the bolt head (13) is a hex head or a dome head.

3. Wind turbine according to claim 1 or 2, **characterized in that** the tool mount (15) comprises at least two several flat surfaces arranged around the circumference of the shaft (14), or that the tool mount (15) is a square or hex socket or a recess.

4. Wind turbine according to claim 3, **characterized in that** the tool mount (15) is a square head or a hex head.

5. Wind turbine according to one of the preceding claims, **characterized in that** in case the bolt (12) comprises a hex head a washer (16) having an larger diameter than the hex head is arranged between the hex head and the sealing washer (17), and that in case the bolt (12) comprises a dome head the sealing washer (17) is arranged between the dome head and the facing element (7) .

6. Wind turbine according to one of the preceding claims, **characterized in that** a spring washer (20) biasing the nut (21) is provided.

7. Wind turbine according to claim 6, **characterized in that** the spring washer (20) rests against the nut (21) and either the mounting structure (22) or a washer (19) resting against the mounting structure (22).

8. Wind turbine according to one of the preceding claims, **characterized in that** the facing element (7) is a fiber glass component or a carbon fiber component.

9. Wind turbine according to one of the preceding claims, **characterized in that** the facing element (7) of the nacelle (3) is a canopy (8) or a part of a canopy (8) or a side wall element (9) and/or a spinner (10) attached to the hub (4).

## Patentansprüche

1. Windturbine mit einer Gondel (3), umfassend eine Montagestruktur (22), an der zumindest ein Verkleidungselement (7) befestigt ist, und/oder mit einer Nabe (4), umfassend eine Montagestruktur (22), an der zumindest ein Verkleidungselement (7) befestigt ist, wobei zumindest ein Verkleidungselement (7) mit mehreren Befestigungsvorrichtungen (11) befestigt ist, **dadurch gekennzeichnet, dass** jede Befestigungsvorrichtung (11) eine Schraube (12) mit einem Schraubenkopf (13) an einem Ende, einer Gewindewelle (14), die sich durch eine Öffnung (23, 24) im Verkleidungselement (7) und der Montagestruktur (22) erstreckt, und einer Werkzeugbefestigung (15) zum Befestigen eines Werkzeugs zum Halten der Schraube (12), und eine Mutter (21) aufgeschraubt auf die Gewindewelle (14), umfasst, wobei zumindest eine Abdichtscheibe (17), umfassend eine Metallscheibe (18) und ein Abdichtmittel (18a), angeordnet am inneren Umfang, an der Außenseite des Verkleidungselements (7) angeordnet ist, wobei der Schraubenkopf (13) an der Außenseite der Gondel (3) oder der Nabe (4) positioniert ist und die Werkzeugbefestigung (15) und die Mutter (21) an der Innenseite der Gondel (3) oder der Nabe (4) positioniert sind.

2. Windturbine nach Anspruch 1, **dadurch gekennzeichnet, dass** der Schraubenkopf (13) ein Sechskantkopf oder ein Halbrundkopf ist.

3. Windturbine nach Anspruch 1 oder 2, **dadurch gekennzeichnet, dass** die Werkzeugbefestigung (15) mindestens zwei verschiedene flache Oberflächen umfasst, die um den Umfang der Welle (14) angeordnet ist, oder dass die Werkzeugbefestigung (15) eine quadratische oder sechseckige Aufnahme oder eine Vertiefung ist.

4. Windturbine nach Anspruch 3, **dadurch gekennzeichnet, dass** die Werkzeugbefestigung (15) ein Vierkantkopf oder ein Sechskantkopf ist.

5. Windturbine nach einem der vorhergehenden Ansprüche, **dadurch gekennzeichnet, dass** in einem Fall, in dem die Schraube (12) einen Sechskantkopf umfasst, eine Unterlegscheibe (16) mit einem größeren Durchmesser als der Sechskantkopf zwischen dem Sechskantkopf und der Abdichtscheibe (17) angeordnet ist, und dass in einem Fall, in dem die Schraube (12) einen Halbrundkopf umfasst, die Abdichtscheibe (17) zwischen dem Halbrundkopf und dem Verkleidungselement (7) angeordnet ist.

6. Windturbine nach einem der vorhergehenden Ansprüche, **dadurch gekennzeichnet, dass** eine Federscheibe (20) bereitgestellt ist, die die Mutter (21) vorspannt.

7. Windturbine nach Anspruch 6, **dadurch gekennzeichnet, dass** die Federscheibe (20) an der Mutter (21) und entweder der Montagestruktur (22) oder einer an der Montagestruktur (22) anliegenden Unterlegscheibe (19) anliegt.

8. Windturbine nach einem der vorhergehenden Ansprüche, **dadurch gekennzeichnet, dass** das Verkleidungselement (7) eine Glasfaserkomponente oder eine Kohlefaserkomponente ist.

9. Windturbine nach einem der vorhergehenden Ansprüche, **dadurch gekennzeichnet, dass** das Verkleidungselement (7) der Gondel (3) eine Haube (8) oder ein Teil einer Haube (8) oder ein Seitenwandelement (9) und/oder ein an der Nabe (4) befestigter Spinner (10) ist.

## Revendications

1. Éolienne ayant une nacelle (3) comprenant une structure de montage (22) à laquelle au moins un élément de parement (7) est attaché et/ou ayant un moyeu (4) comprenant une structure de montage (22) à laquelle au moins un élément de parement (7) est attaché, lequel au moins un élément de parement (7) est attaché avec plusieurs dispositifs de fixation (11), **caractérisé en ce que** chaque dispositif de fixation (11) comprend un boulon (12) avec une tête de boulon (13) au niveau d'une extrémité, un arbre fileté (14) s'étendant à travers une ouverture (23, 24) dans l'élément de parement (7) et la structure de montage (22) et un porte-outil (15) pour attacher un outil afin de maintenir le boulon (12), et un écrou (21) vissé sur l'arbre fileté (14), dans laquelle au moins une rondelle d'étanchéité (17) comprenant un disque métallique (18) et un moyen d'étanchéité (18a) agencés au niveau de la circonférence intérieure est agencée à l'extérieur de l'élément de parement (7), la tête de boulon (13) étant positionnée à l'extérieur de la nacelle (3) ou du moyeu (4) et le porte-outil (15) et l'écrou (21) étant positionnés à l'intérieur de la nacelle (3) ou du moyeu (4).

2. Éolienne selon la revendication 1, **caractérisée en ce que** la tête de boulon (13) est une tête hexagonale ou une tête en dôme.

3. Éolienne selon la revendication 1 ou 2, **caractérisée en ce que** le porte-outil (15) comprend au moins deux surfaces plates agencées autour de la circonférence de l'arbre (14), ou **en ce que** le porte-outil (15) est une douille carrée ou hexagonale ou un évidement.

4. Éolienne selon la revendication 3, **caractérisée en ce que** le porte-outil (15) est une tête carrée ou une tête hexagonale.

5. Éolienne selon l'une des revendications précédentes, **caractérisée en ce que**, dans le cas où le boulon (12) comprend une tête hexagonale, une rondelle (16) ayant un diamètre supérieur à celui de la tête hexagonale est agencée entre la tête hexagonale et la rondelle d'étanchéité (17), et **en ce que**, dans le cas où le boulon (12) comprend une tête en dôme, la rondelle d'étanchéité (17) est agencée entre la tête en dôme et l'élément de parement (7).

6. Éolienne selon l'une des revendications précédentes, **caractérisée en ce qu'**une rondelle élastique (20) sollicitant l'écrou (21) est prévue.

7. Éolienne selon la revendication 6, **caractérisée en ce que** la rondelle élastique (20) s'appuie contre l'écrou (21) et soit la structure de montage (22) soit une rondelle (19) s'appuyant contre la structure de montage (22).

8. Éolienne selon l'une des revendications précédentes, **caractérisée en ce que** l'élément de parement (7) est un composant en fibre de verre ou un composant en fibre de carbone.

9. Éolienne selon l'une des revendications précédentes, **caractérisée en ce que** l'élément de parement (7) de la nacelle (3) est un auvent (8) ou une partie d'un auvent (8) ou un élément de paroi latérale (9) et/ou un nez de rotor (10) attaché au moyeu (4) .
